# EUROPEAN PATENT APPLICATION

(11) **EP 4 197 347 A1**
(43) Date of publication of application: **21.06.2023**
(21) Application number: 21214652.6
(22) Date of filing: 15.12.2021
(51) Int. Cl.: A23L 29/244, A23J 3/22, A23L 29/269

(54) **MEAT SUBSTITUTE PRODUCTS FREE OF METHYLCELLULOSE**

(71) Applicant: Cargill, Incorporated, Wayzata, Minnesota 55391 (US)
(72) Inventor: The designation of the inventor has not yet been filed
(74) Representative: Jantschy, Jasmin

(57) **Abstract**

The invention relates to the field of meat substitute products, also referred to as meat analogues or meat alternatives. In particular the invention relates to a clean-label methylcellulose (or its derivatives) replacement. This replacement composition can be used to prepare a matrix composition, which can then be incorporated into a meat substitute product together with other plant-based, clean-label ingredients.

## Description

### FIELD OF THE INVENTION

The invention relates to the field of meat substitute products, also referred to as meat analogues or meat alternatives.

### BACKGROUND OF THE INVENTION

There is a growing trend of a shift in diets towards more plant-based foods. Trends include flexitarianism, characterized by only occasionally consuming meat, vegetarianism, characterized by excluding animal-containing food but consuming dairy and egg, and finally veganism, characterized by excluding both animal-containing food and animal by-products (including dairy and egg). Over the last decade, increasing investment has been directed towards creating meat alternative or substitute products with ever closer organoleptic properties to meat.

Texture and mouthfeel, appearance, and flavor-these are the elements of meat that the plant-based meat alternative manufacturers are trying to capture, with varying degrees of success, using a range of ingredients to achieve these properties.

Today, most plant-based meat products contain the ingredient methylcellulose or a derivative thereof. Methylcellulose is the simplest cellulose derivative. Methyl groups (-CH3) replace the naturally occurring hydroxyls at the C-2, C-3 and/or C-6 positions of the cellulose anhydro-D- glucose units. Typically, commercial methylcellulose is produced via alkaline treatment (NaOH) for swelling cellulosic fibers to form an alkali-cellulose which then can react with an etherifying agent such as chloromethane, iodomethane or dimethyl sulfate. Acetone, toluene, or isopropanol can also sometimes be added, after the etherifying agent, for tailoring the final degree of methylation. As a result, methylcellulose has amphiphilic properties and exhibits a unique thermal behavior which is not found in naturally occurring polysaccharide structures i.e. it gels upon heating.

Thus methylcellulose acts as a binder, providing adhesion to uncooked product, and when heated provides gelation that lends to a meat like texture with realistic firmness and springiness while retaining moisture and increasing the perception of juiciness.

However, consumers are becoming increasingly concerned about chemically modified ingredients in their products, which they cannot understand or which they do not have in their kitchen pantry. Methylcellulose falls into both these categories, which is why formulators are now looking for a solution that will provide the same or similar functionality as methylcellulose, whilst offering a cleaner label.

Therefore, one objective of the invention is to find a suitable clean-label methylcellulose (or derivatives thereof) replacement for meat substitute products.

Preferably, the methylcellulose (or derivatives thereof) replacement needs to act not only as a binder in an uncooked product, but also when heated provides gelation that lends to a meat-like texture with realistic firmness and springiness while retaining moisture and increasing the perception of juiciness.

Current clean label solutions, such as citrus fibers alone, unfortunately do not bring the necessary increase in firmness upon heating. Furthermore the high inclusion rate of citrus fibers needed to act as a methylcellulose replacement may also impart a bitter flavor.

Thus, a better solution is needed that is clean label and can fulfill at least partially some of the functions that methylcellulose currently fulfills.

### SUMMARY OF THE INVENTION

The present invention relates to a meat substitute product having a plant-based, clean label, natural binding agent as a substitute for methylcellulose and its derivatives (e.g. methyl-hydroxypropyl-cellulose).

The invention relates to a composition suitable for replacing methylcellulose and derivatives thereof in meat substitute products essentially consisting of:
a) One or more of the following functional carbohydrates selected from the group consisting of carrageenan, agar, curdlan gum, paramylon, gellan gum, xanthan gum, galactomannans, beta glucans, arabinoxylans, pectin and alginate;
b) One or more plant proteins; and
c) Optionally one or more fillers selected from the group consisting of starch, plant-based fiber and microcrystalline cellulose;
wherein if the functional carbohydrate(s) comprises curdlan gum, then the product further comprises one or more of the group consisting of cold-water soluble hydrocolloid (e.g. konjac gum), cold-water soluble fiber, cold-water soluble polysaccharide and pectin;
wherein if the functional carbohydrate(s) does not comprise curdlan gum, then the product further comprises konjac gum.

Preferably, the composition can have one or more functional carbohydrates selected specifically from the group consisting of carrageenan, agar, gellan gum, and xanthan gum and the one or more plant proteins are preferably selected from low temperature gelling proteins, which denature and gel at a temperature of from 40 to 85°C. High temperature gelling proteins, which denature and gel above 85°C, could also be used instead of the low temperature gelling proteins if less firmness in the final meat substitute product is needed.

If the composition comprises curdlan gum as the functional carbohydrate, then the one or more plant proteins can be selected from any plant protein. The plant protein is preferably selected from legume protein (e.g. pea, fava, soy, chickpea, lupin, mung bean, and lentil protein), cereal protein (e.g. corn, wheat, oat, barley, rice protein), pseudocereal protein (e.g. buckwheat, amaranth, quinoa), potato protein, water lentil protein, canola protein, sunflower protein, hemp protein and pumpkin protein.

The invention also relates to a **meat substitute product substantially free of methylcellulose and derivatives thereof** comprising the composition suitable for replacing methylcellulose and derivatives thereof according to the above.

The invention also relates to a **matrix composition** essentially consisting of the composition according to invention above and plant protein powder (preferably pea protein powder or a low temperature gelling protein powder such as potato protein powder or soy protein powder) and water, and optionally salt and fat(s) and/or oil(s).

**The invention also relates to the use of the inventive composition** to replace methylcellulose and/or derivatives thereof in meat substitute products, preferably selected from the group consisting of vegetarian or vegan burger patties, sausages, cold-cuts, nuggets, "crumbles", meat-like toppings (e.g. for dishes such as pizzas, pies, flans, quiche and the like), seafood alternatives, poultry alternatives, breakfast meat alternatives and mincemeat alternatives.

**The invention also covers a process for preparing a meat substitute product,** as described above, comprising the following steps:
i) mixing the composition according to the invention with plant protein powder (preferably pea protein powder, or a low temperature gelling protein powder such as potato protein powder or soy protein powder) and water, optionally salt and fat(s) and/or oil(s), to prepare a matrix composition;
ii) mixing the matrix composition with one or more of the following:
   a) Textured plant protein and/or powdered plant protein isolate, concentrate or flour, preferably selected from one or more of legume protein (preferably selected from one or more of pea, soy, fava, lupin, chickpea and lentil protein), cereal protein (preferably selected from one or more of corn, wheat, barley and oat protein), pseudocereal protein (e.g. buckwheat, amaranth, quinoa), potato protein, water lentil protein, mycoprotein, algae protein, and fungal protein;
   b) Fat(s) and/or oil(s);
   c) Salt;
   d) Water;
   e) Flavoring components;
   f) Inclusions, for instance pieces or chunks of vegetable, fruit or fungi;
   g) Coloring components;
   h) Preservatives
   to prepare an uncooked meat substitute product; and
iii) optionally cooking the uncooked meat substitute product.

### DETAILED DESCRIPTION OF THE INVENTION

### 1. The composition

The composition is suitable for replacing methylcellulose and derivates thereof in meat substitute products.

Methylcellulose is a chemical compound derived from cellulose. It is also known under the European food additive E number E461.

Some known derivatives of methylcellulose used in the food industry are methyl-hydroxyethyl-cellulose and methyl-hydroxypropyl-cellulose.

The composition can be prepared by simple dry-blending of the ingredients in a standard mixing device.

### Functional carbohydrates

The composition essentially consists of one or more functional carbohydrates, one or more plant proteins, and optionally one or more fillers.

Functional carbohydrates are selected from carrageenan, agar, curdlan gum, paramylon, gellan gum, xanthan gum, galactomannans, beta glucans, arabinoxylans, pectin and alginate.

Galactomannans include guar gum, locust bean gum and taragum.

The structure of arabinoxylans consists of a backbone of β-(1,4)-linked xylose residues, which are substituted with arabinose residues on the C(O)-2 and/or C(O)-3 position. Arabinoxylans have been found in all major cereal grains, including rye, wheat, barley, oats, rice, sorghum, maize, millet as well as in other plants, such as psyllium, flax seed, bamboo shoots, and rye grass.

β-Glucans are the major constituents of dietary fiber in cereal grains such as barley and oats. The beta-glucan is a non-starch viscous polysaccharide formed by connecting a pyran glucose unit through 1-3 and 1-4 glycosidic bonds.

Preferably, the functional carbohydrate(s) is carrageenan or agar or a mixture of both. More preferably, the functional carbohydrate is carrageenan or agar.

The functional carbohydrate(s) is preferably present of from 2.5 to 50wt%, more preferably 3 to 40wt%, even more preferably 5 to 35wt%, most preferably from 6 to 30wt%.

### Konjac qum

If the functional carbohydrate(s) comprises curdlan gum, then the composition preferably further (essentially) consists of one or more of the group consisting of cold-water soluble hydrocolloid (such as konjac gum), cold-water soluble fiber, cold-water soluble polysaccharide or pectin. The cold-water soluble hydrocolloid (such as konjac gum), cold-water soluble fiber, cold-water soluble polysaccharide or pectin are preferably present in a total amount from 1.5 to 25wt%, preferably 2.0 to 20wt%, more preferably 2.5 to 15wt% of the composition.

Possible cold-water soluble hydrocolloids include konjac gum, but also xanthan gum, galactomannan, gellan gum, carrageenan and alginate and the like.

Cold-water soluble fibers include citrus fiber, flax fiber and the like.

Cold-water soluble polysaccharides include pregelatinized starch, cold-water swelling starch or partially pregelatinized starch, and the like.

However, if the functional carbohydrate(s) do/does not comprise curdlan gum, then the composition preferably further (essentially) consists of konjac gum. Preferably from 1.5 to 25wt%, preferably 2.0 to 20wt%, more preferably 2.5 to 15wt% of the composition is konjac gum.

It has been surprisingly found that konjac gum is particularly preferred in the composition of the invention in order to impart more of the functional properties usually achieved with methylcellulose (or derivatives thereof).

### Plant proteins

The composition also contains one or more plant proteins. The plant protein in the replacement composition is generally not texturized, but in a powder form. The one or more plant proteins can be selected from any known plant proteins. The plant protein can be selected from legume protein (e.g. pea, fava, soy, chickpea, lupin, mung bean, and lentil protein), cereal protein (e.g. corn, wheat, oat, barley, rice protein), pseudocereal protein (e.g. buckwheat, amaranth, quinoa), potato protein, water lentil protein, canola protein, sunflower protein, hemp protein and pumpkin protein.

The gelation process in proteins by heating involves denaturation of the proteins followed by subsequent aggregation of denatured proteins, resulting in the formation of a gel network structure.

In one aspect of the invention, the plant proteins are selected from low temperature gelling proteins i.e. that denature and gel at a temperature of from 40 to 85°C. Such low temperature gelling proteins are preferably selected from potato protein, protein from microbial fermentation, oil seed protein (such as canola or sunflower protein), or low temperature gelling protein extracted from plant sources, or low temperature gelling protein from partially denatured protein or low temperature gelling proteins derived from algae- or microalgae (e.g. Euglena).

However, the one or more plant proteins can also be selected from other proteins, for example from legume proteins. Examples of legume proteins include, but are not limited to, pea, fava, soy, chickpea, lupin, mung bean, and lentil protein.

Other examples of plant proteins include cereal protein (such as corn, wheat protein, oat, barley, or rice protein), pseudocereal protein (e.g. buckwheat, amaranth, quinoa), potato protein, water lentil protein, canola protein, sunflower protein, hemp protein and pumpkin protein.

Preferably, when the one or more functional carbohydrates are selected from the group consisting of carrageenan, agar, gellan gum, and xanthan gum, then the one or more plant proteins are selected from low temperature gelling proteins, as described above. High temperature gelling proteins, which denature and gel above 85°C, could also be used instead of the low temperature gelling proteins if less firmness in the final meat substitute product is needed.

Preferably, when the one or more functional carbohydrates is selected from curdlan gum, then the one or more plant proteins are selected from any plant protein. The plant protein is preferably selected from legume protein (e.g. pea, fava, soy, chickpea, lupin, mung bean, and lentil protein), cereal protein (e.g. corn, wheat, oat, barley, rice protein), pseudocereal protein (e.g. buckwheat, amaranth, quinoa), potato protein, water lentil protein, canola protein, sunflower protein, hemp protein and pumpkin protein.

The composition preferably comprises from 25 to 96wt% of one or more plant proteins. More preferably, the composition comprises from 30 to 95wt% of one or more plant proteins, even more preferably 35 to 90wt% and most preferably 40 to 85wt%.

### Fillers

The composition may further optionally contain one or more fillers. Such fillers are selected from the group consisting of starch, flour, plant-based fibers and microcrystalline cellulose.

Starches can be selected from thermally inhibited starches (e.g. Cargill's SimPure^{®}), chemically modified or unmodified starches, native starches (including starches containing 10-35wt% amylose), high amylose starches (comprising more than 35wt% amylose), and low amylose starches (also known as waxy starches with less than 10wt% amylose).

The flour can be any cereal based flour. Examples include thermally inhibited flour (e.g. potato flour, tapioca flour or rice flour), thermally treated flour (e.g. soy flour), high fiber flour (e.g. Sustagrain^{®}), or high-protein flour (containing more than > 10wt % of protein on a dry weight basis e.g. Prolia^{™}, which is a soy flour having around 54wt% protein on a dry weight basis).

The pectins can be any naturally derived pectin from plant-based sources, for example from sugar beet pectin, apple pectin, citrus pectin.

The plant-based fibers can be any naturally derived fibers. Examples include citrus fibers, legume fibers (e.g. pea fibers), flax fibers, potato fibers, psyllium fibers, apple fibers, carrot fibers, tapioca fibers, plantain fibers, sugarbeet fibers, cereal fibers (e.g. millet fibers, oat fibers, barley fibers, corn fibers).

The filler(s) content of the composition is preferably of from 2.5 to 55wt%, more preferably from 3 to 50wt%, most preferably from 4 to 45wt%.

### 2. Meat substitute products

Meat substitute products also refers to meat alternative products, meat analogue products, meat mimicking products, meat replacement products and the like. By "meat" it is meant herein not only substitutes for red meats (from Bovidae), such as beef, lamb, bison, goat and mutton, but any animal meat, including poultry (e.g. chicken, turkey, duck, ostrich, pigeon), fish (e.g. whether farmed or wild-caught), and shellfish(e.g. shrimp, prawns, crab, crayfish, lobster, scallops).

Preferred meat substitute products are vegetarian or vegan burger patties, sausages, cold-cuts, nuggets, "crumbles" or meat-like toppings (e.g. for dishes such as pizzas, pies, flans, quiche and the like), seafood alternatives, poultry alternatives, breakfast meat alternatives and mincemeat alternatives. By mincemeat it is included herein also toppings for dishes such as pizzas, pies, flans, quiche and the like.

The meat substitute products can be frozen, fresh, or canned. The meat substitute products can be sold pre-cooked or raw. The meat substitute products can undergo a lethality cook step to make the product fully cooked and ready to eat.

By "vegetarian" it is meant not comprising any animal meat products, including bovid meats, poultry, fish, crustaceans, mollusks, game and the like.

By "vegan" it is meant not comprising any animal meat products, nor any animal by-products, the latter referring to products such as eggs, honey, and dairy products.

The meat substitute product according to the invention comprises the composition suitable for replacing methylcellulose and derivates thereof, as described above.

The meat substitute product is therefore substantially free of methylcellulose and any derivatives thereof. By "substantially free" it is meant herein that no quantity of either methylcellulose or any derivatives thereof is present in traceable amounts in the meat substitute product. Preferably the meat substitute product is free of methylcellulose and any derivates thereof.

### Functional carbohydrate content in the final product

The meat substitute product preferably comprises from 0.2 to 8wt% of functional carbohydrate(s), more preferably from 0.5 to 7wt% of functional carbohydrate(s), most preferably 1.0 to 5wt% of functional carbohydrate(s).

### Koniac gum content in the final product

The meat substitute product shall preferably comprise from 0.1 to 2.5wt% as a total amount of cold-water soluble hydrocolloid and/or cold-water soluble fiber and/or cold-water soluble polysaccharide and/or pectin. The meat substitute product preferably comprises konjac gum, as a cold-water soluble hydrocolloid. More preferably the meat substitute product comprises 0.1 to 2.5wt% of konjac gum.

### Plant protein content in the final product

The meat substitute product according to the invention preferably comprises from 10 to 98wt% of total plant protein, more preferably from 15 to 95wt%, most preferably from 20 to 90wt%.

The final product may comprise textured plant protein. The textured protein can be a high-moisture textured plant protein or a dry textured plant protein.

Preferably, 25 to 98wt% of the product comprises high-moisture textured plant protein, more preferably from 50 to 95wt%, more preferably from 60 to 90wt%. High-moisture textured plant protein means plant protein that has been extruded or texturized using a wet process, as is well known in the art.

Alternatively, 10 to 35wt% of the product comprises dry textured plant protein, preferably from 10 to 30wt%, more preferably from 15 to 40wt%. Dry textured plant protein means plant protein that has been extruded or texturized using a dry process, as is well known in the art.

The final product may comprise additional plant protein in powder form, for instance as a concentrate or an isolate or a flour.

The textured plant protein and/or plant protein powder concentrate, isolate or flour can be selected from the group consisting of legume protein, (preferably selected from one or more of pea, soy, fava, lupin, chickpea and lentil protein), cereal protein, (preferably selected from one or more of corn, wheat, barley and oat protein), pseudocereal protein (e.g. buckwheat, amaranth, quinoa), potato protein, canola protein, sunflower protein, hemp protein, pumpkin protein, mycoprotein, algae protein and fungal protein.

### Filler content in the final product

The meat substitute product according to the invention preferably comprises of from 0.2 to 10wt% of filler(s), more preferably from 0.5 to 8wt%, even more preferably from 0.7 to 7wt%, most preferably from 1 to 6wt%.

### Other ingredients and additives

Other ingredients and additives well-known to the person skilled in the art for use in meat substitute products can be used in the context of this invention.

The meat substitute product may contain textured plant protein and/or powdered plant protein (isolate or concentrate or flour) selected from legume protein (preferably selected from one or more of pea, soy, fava, lupin, chickpea, mung bean and lentil protein), cereal protein (preferably selected from one or more of corn, wheat, barley, rice and oat protein), pseudocereal protein (e.g. buckwheat, amaranth, quinoa), potato protein, water lentil protein, canola protein, sunflower protein, hemp protein, pumpkin protein, mycoprotein, algae protein and fungal protein. The powdered plant protein isolate, concentrate, or flour may be added into the final meat substitute product in addition to the plant protein already originating from the methylcellulose replacement composition according to the invention.

The meat substitute product can further contain one or more of the following typical ingredients
a) Fat(s) and/or oil(s);
b) Salt;
c) Water;
d) Flavoring components;
e) Inclusions, for instance pieces or chunks of vegetable, fruit or fungi;
f) Color components;
g) Preservatives;
h) Enzymes, such as transglutaminase.

As used herein "fat" is generally solid at room temperature, for instance coconut fat, palm fat or cocoa butter. Coconut fat is generally preferred.

As used herein "oil" is generally liquid at room temperature, for instance sunflower oil, canola oil, soy oil, corn/maize oil, olive oil, or avocado oil. Sunflower oil is generally preferred.

### 3. Process for preparing the meat substitute products

The process for preparing the meat substitute products according to the invention comprises similar steps as to when using methylcellulose (or its derivative) in a recipe. The composition according to the invention simply replaces the methylcellulose (or its derivative) in the steps taken to make the final product. The composition suitable for use as a methylcellulose and derivatives replacement is first incorporated into a matrix composition. This is done by homogenously mixing the ingredients for the matrix composition together.

The matrix composition comprises or essentially consists of:
- the composition (suitable for use as a methylcellulose and methylcellulose derivatives replacement) according to the invention
- plant protein powder (preferably pea protein powder or low temperature gelling protein such as potato protein powder or soy protein powder),
- water,
- optionally salt, and
- optionally fat(s) and/or oil(s).

As used herein "fat" is generally solid at room temperature, for instance coconut fat, palm fat or cocoa butter. Coconut fat is generally preferred.

As used herein "oil" is generally liquid at room temperature, for instance sunflower oil, canola oil, soy oil, corn/maize oil, olive oil, or avocado oil. Sunflower oil is generally preferred.

The plant protein powder can be any plant protein powder, whether a plant protein isolate or concentrate. Legume protein powders are preferred. More preferred are pea protein powders. Most preferred is a pea protein concentrate powder.

This matrix composition is then mixed with the other ingredients to prepare the uncooked meat substitute product.

The process therefore includes the following steps:
i) mixing the composition (suitable for use as a methylcellulose and derivatives replacement) according to the invention with plant protein powder (preferably pea protein powder or low temperature gelling protein such as potato protein powder or soy protein powder), and water, and optionally salt and fat(s) and/or oil(s), to prepare a matrix composition;
ii) mixing the matrix composition with one or more of the following:
   a) Textured plant protein and/or plant protein powder concentrate, isolate or flour selected from the group consisting of legume protein, (preferably selected from one or more of pea, soy, fava, lupin, chickpea and lentil protein), cereal protein, (preferably selected from one or more of corn, wheat, barley and oat protein), pseudocereal protein (e.g. buckwheat, amaranth, quinoa), potato protein, water lentil protein, canola protein, sunflower protein, hemp protein, pumpkin protein, mycoprotein, algae protein and fungal protein;
   b) Fat(s) and/or oil(s);
   c) Salt;
   d) Water;
   e) Flavoring components;
   f) Inclusion, such as pieces or chunks of fruit, vegetable and fungi;
   g) Coloring components;
   h) Preservatives
   to prepare an uncooked meat substitute product; and
iii) optionally cooking the uncooked meat substitute product.

Thus the invention also covers the use of the composition according to the invention to replace methylcellulose (or derivatives thereof) in meat substitute products.

As used herein "fat" is generally solid at room temperature, for instance coconut fat, palm fat or cocoa butter. Coconut fat is generally preferred.

As used herein "oil" is generally liquid at room temperature, for instance sunflower oil, canola oil, soy oil, corn/maize oil, olive oil, or avocado oil. Sunflower oil is generally preferred.

The invention is also applicable for fully cooked meat substitute products that undergo a lethality cook step to make the product ready to eat.

### EXAMPLES

The following "methylcellulose replacement blends" were prepared by blending the ingredients according to the amounts in Tables (A) to (E) and these were then compared to methylcellulose when in used in a vegan burger patty.

**Table A**

| | Carrageenan (Satiagel^{™} 740) (wt%) | Konjac gum (wt%) | Functional native starch (Simpure^{®} 99408) (wt%) | Potato Protein (Solanic^{™} 200) (wt%) | Total of the meat substitute product (wt%) |
|---|---|---|---|---|---|
| Blend A1 | 0.8 | 1.0 | 1.0 | 2.0 | 4.8 |
| Blend A2 | 0.8 | 1.0 | 1.0 | 3.0 | 5.8 |
| Blend A3 | 0.8 | 1.0 | 1.5 | 2.0 | 5.3 |
| Blend A4 | 0.8 | 1.0 | 1.0 | 5.0 | 7.8 |
| Blend A5 | 0.8 | 0.8 | 1.0 | 4.4 | 7.0 |
| Blend A6 | 0.8 | 1.0 | 0.0 | 3.5 | 5.3 |
| Blend A7 | 0.5 | 0.8 | 1.2 | 4.5 | 7.0 |
| Blend A8 | 0.0 | 1.2 | 1.5 | 4.5 | 7.2 |
| Blend A9 | 0.0 | 1.5 | 1.0 | 5.0 | 7.5 |

**Table B**

| | Carrageenan (Satiagel^{™} 740) (wt%) | Konjac gum (wt%) | Citrus Fiber (CitriFi 100M 40) (wt%) | Potato Protein (Solanic^{™} 200) (wt%) | Total of the meat substitute product (wt%) |
|---|---|---|---|---|---|
| Blend B1 | 0.8 | 0.5 | 2.0 | 3.0 | 6.3 |
| Blend B2 | 0.8 | 1.0 | 0.0 | 5.0 | 6.8 |
| Blend B3 | 0.5 | 0.5 | 1.5 | 3.0 | 5.5 |

**Table C**

| | Agar (wt%) | Konjac gum (wt%) | Functional native starch (Simpure^{®} 99408) (wt%) | Potato Protein (Solanic^{™} 200) (wt%) | Total of the meat substitute product (wt%) |
|---|---|---|---|---|---|
| Blend C1 | 1.5 | 0.8 | 1.0 | 2.0 | 5.3 |
| Blend C2 | 1.5 | 0.8 | 1.0 | 4.0 | 7.3 |

**Table D**

| | Agar (wt%) | Konjac gum (wt%) | Citrus Fiber (CitriFi 100M 40) (wt%) | Potato Protein (Solanic^{™} 200) (wt%) | Total of the meat substitute product (wt%) |
|---|---|---|---|---|---|
| Blend D1 | 2.50 | 0.5 | 1.00 | 2.50 | 6.5 |

**Table E**

| | Curdlan (wt%) | Konjac gum (wt%) | Functional native starch (Simpure^{®} 99408) (wt%) | Pea protein (Puris^{™}) | Total of the meat substitute product (wt%) |
|---|---|---|---|---|---|
| Blend E1 | 2.5 | 1.00 | 0.00 | 3.5 | 7.0 |
| Blend E2 | 3.5 | 1.00 | 0.00 | 3.5 | 8 |

The blends were then incorporated into a matrix composition in analogy to the recipe used to prepare a methylcellulose-containing matrix i.e.

| **Ingredient Description** | | **% Weight** |
|---|---|---|
| **Hydrated textured pea protein (TPP):** | | **67** |
| | | 48 |
| | Water (to hydrate TPP) | [adapted to maintain same water to TPP weight ratio, when using a "methylcellulose replacement blend"] |
| | | 19 |
| | PURIS^{™} TPP (having 80 % protein content) | [reduced when using a "methylcellulose replacement blend"] |
| | | |
| **Matrix composition:** | | **33** |
| | Water for matrix | 20 |
| | Pea protein powder | 3.5 |
| | Methylcellulose [or Methylcellulose replacement blends A1-A9, B1-B3, C1-C2, D1, E1-E2] | |
| | | 2 |
| | | [6-8 when using a "methylcellulose replacement blend"] |
| | Salt | 1.5 |
| | Coconut oil | 6 |
| | | |
| **Total** | | **100** |

For preparing the meat substitute products according to the invention, the methylcellulose was replaced with methylcellulose replacement blends. However, the amount of the methylcellulose replacement blend was adapted. Depending on the blend it was included in the meat substitute product at around 6-8wt%. This increase from 2wt% to 6-8wt% was compensated by a corresponding decrease in the PURIS^{™} textured pea protein (TPP). The amount of water to hydrate the TPP was therefore also adapted accordingly in order to maintain the same water:TPP weight ratio.

When the methylcellulose replacement blend contained curdlan gum, the matrix composition required a higher content of water.

The matrix composition was thus prepared as follows:
1. Methylcellulose or the above "methylcellulose replacement blend" was added to a food processor and cold water (<5°C) was poured into the food processor while mixing until a white frothy gel was formed after 3-4 minutes.
2. Add (pea protein powder^{∗},) salt and coconut oil and mix thoroughly

*^{∗}For the examples using the "methylcellulose replacement blend" according to the invention, the additional protein powder was already incorporated into the "methylcellulose replacement blend" either as pea protein or as potato protein depending on the blend.*

The vegan patties were then prepared as follows:
1. Textured pea protein from PURIS^{®} was hydrated with water and mixed in a paddle mixer for 5-8 minutes until dull sheen/no residual water was seen.
2. Either methylcellulose-containing reference or "the methylcellulose replacement blend" was added and mixed with the hydrated textured pea protein.
3. Product were chilled down to 5°CF in blast freezer or cooler for 5-10 minute max to prevent coconut oil chip (added in the next step) from melting and to facilitate forming of the patties.
4. Coconut oil chips were added and the product was mixed until the coconut oil chips were evenly distributed.
5. The patties were scaled to the desired individual weight of about 115g and formed into a patty shape ready for freezing or cooking.

The patties were then measured with a texture analyzer to analyze hardness/firmness according to the following protocol:
1. Texture Analysis was done on at least 3 patties of each sample Blend.
2. Vegan patties were cooked from frozen on a top grill at about 180°C. They were cooked on both sides for 5 minutes and then flipped a third time and then cooked to an internal temperature of 74-77°C.
3. Once patties reached 74-77°C, they were removed from the flat top and the texture analysis was run immediately while the products were still hot.
4. A texture analyzer with a 50 kg load cell and 3-inch diameter flat cylinder aluminum plate probe was used to do the "Double compression texture profile analysis test" with the parameters below:

| | |
|---|---|
| Pre-test speed | 1 mm/sec |
| Test speed | 5 mm/sec |
| Post-test speed | 5 mm/sec |
| Target, strain | 50% strain |
| Time | 5 sec |
| Trigger | Auto |
| Trigger force | 5.0 g |

The patties were also evaluated in a blind tasting session by a sensory panel, whereby hot gel functionality was rated on a scale from 1 to 5, 5 being the most similar to methylcellulose:
1 = no gel formation, still in liquid phase
5 = firm hot gel like methylcellulose, good gel resistance when pressure is applied

Results from the texture analysis and the sensory evaluation are shown below:

| | Total of the meat substitute product (wt%) | Hardness/Firmness measured by Texture Analyzer (g) | Sensory panel comments | Hot Gel Functionality |
|---|---|---|---|---|
| | | | | Rating from 1 to 5 (where 5 is as good as methylcellulose) |
| Methylcellulose (Reference) | 2 | 26067 | NA | 5 |
| Blend A1 | 4.8 | 10653 | Off-flavor, soft in middle, clean cut | 2 |
| Blend A2 | 5.8 | 10427 | Cleaner flavor, really clean cut, was the firmest | 3 |
| Blend A3 | 5.3 | 10577 | Cleaner flavor, soft in middle like Blend A1 | 2 |
| Blend A4 | 7.8 | 19576 | Potato protein flavor, very clean cut, firmest product | 4 |
| Blend A5 | 7.0 | 13415 | Strong potato protein flavor, firm | 3 |
| Blend A6 | 5.3 | 11859 | Strong potato protein flavor, firmer than Blend A5, least bad off flavor | 3-4 |
| Blend A7 | 7.0 | 12767 | Strong aftertaste, firmer than Blend A6 | 4 |
| Blend A8 | 7.2 | 17895 | Firm crust, soft inside | 2 |
| Blend A9 | 7.5 | 15948 | Firmer than Blend A8, but not as firm as Blend A6 | 2-3 |
| Blend B1 | 6.3 | 9923 | Really soft and crumbly, hard to cut | 1 |
| Blend B2 | 6.8 | 17586 | Strong potato flavor and off notes, firmer bite, good hot gel | 4 |
| Blend B3 | 5.5 | 8424 | Very soft gel, not great hot bite | 2 |
| Blend C1 | 5.3 | 9740 | Very soft gel, held together but mushy chewy, clean flavor, firmer than Blend C2 | 2 |
| Blend C2 | 7.3 | 13903 | Off note, soft gel hot, firm crust, didn't hold well together hot | 2 |
| Blend D1 | 6.5 | 12379 | NA | 2 |
| Blend E1 | 7.0 | 7771 | off note, soft hot gel | 1 |
| Blend E2 | 8.0 | 9555 | Good structure, like a firmer bread but hot bite was still pretty easy to cut through | 2 |

## Claims

1. A meat substitute product, substantially free of methylcellulose and derivatives thereof, comprising:
a) One or more of the following functional carbohydrates selected from the group consisting of carrageenan, agar, curdlan gum, paramylon, gellan gum, xanthan gum, galactomannans, beta glucans, arabinoxylans, pectin and alginate;
b) One or more plant proteins; and
c) Optionally one or more fillers selected from the group consisting of starch, flour, plant-based fiber and microcrystalline cellulose
wherein if the functional carbohydrate(s) comprises curdlan gum, then the product further comprises one or more of the group consisting of cold-water soluble hydrocolloid, cold-water soluble fiber, cold-water soluble polysaccharide and pectin;
wherein if the functional carbohydrate(s) does not comprise curdlan gum, then the product further comprises konjac gum.

2. The meat substitute product according to claim 1 comprising from 0.1 to 2.5wt% as a total amount of cold-water soluble hydrocolloid and/or cold-water soluble fiber and/or cold-water soluble polysaccharide and/or pectin, wherein preferably the meat substitute product comprises cold-water soluble hydrocolloid selected from konjac gum.

3. The meat substitute product according to claim 1 or 2 comprising from 0.2 to 8wt% of functional carbohydrate.

4. The meat substitute product according to any one of the previous claims comprising from 10 to 98wt% of plant protein(s), wherein 25 to 98wt% of the product comprises high-moisture textured plant protein.

5. The meat substitute product according to any one of the previous claims comprising from 10 to 98wt% of plant protein(s), wherein 10 to 35wt% of the product comprises dry textured plant protein.

6. The meat substitute product according to any one of the previous claims comprising from 0.2 to 10wt% of filler(s).

7. The meat substitute product according to any one of the previous claims wherein the one or more functional carbohydrates are selected from the group consisting of carrageenan, agar, gellan gum, and xanthan gum and the one or more plant proteins are selected from low temperature gelling proteins, which denature and gel at a temperature of from 40 to 85°C.

8. The meat substitute product according to any one of the previous claims wherein the one or more functional carbohydrates are selected from the group consisting of carrageenan, agar, gellan gum, and xanthan gum and the one or more plant proteins are selected from high temperature gelling proteins, which denature and gel at a temperature above 85°C.

9. The meat substitute product according to any one claims 1 to 6 wherein the functional carbohydrate is selected from curdlan gum and the one or more plant proteins are selected from legume protein, cereal protein, pseudocereal protein, canola protein, sunflower protein, potato protein, water lentil protein, hemp protein and pumpkin protein.

10. The meat substitute product according to any one of the previous claims further comprising one or more of the following:
a) Textured plant protein and/or powdered plant protein isolate, concentrate, or flour selected from legume protein (preferably selected from one or more of pea, soy, fava, lupin, chickpea, mung bean and lentil protein), cereal protein (preferably selected from one or more of corn, wheat, barley, rice and oat protein), soy protein, canola protein, sunflower protein, hemp protein and pumpkin protein, mycoprotein, algae protein, fungal protein;
b) Fat(s) and/or oil(s);
c) Salt;
d) Water;
e) Flavoring components;
f) Inclusions, such as pieces or chunks of vegetable, fruit or fungi;
g) Color components;
h) Preservatives;
i) Enzymes, such as transglutaminase.

11. The meat substitute product according to any one of the previous claims selected from the group consisting of vegetarian or vegan burger patties, sausages, cold-cuts, nuggets, crumbles, meat-like toppings, seafood alternatives, poultry alternatives, breakfast meat alternatives and mincemeat alternatives.

12. **A composition** suitable for replacing methylcellulose and derivates thereof in meat substitute products essentially consisting of:
a) One or more of the following functional carbohydrates selected from the group consisting of carrageenan, agar, curdlan gum, paramylon, gellan gum, xanthan gum, galactomannans, beta glucans, arabinoxylans and alginate, wherein the functional carbohydrate(s) content is preferably of from 2.5 to 50wt%;
b) One or more plant proteins, preferably of from 25 to 96wt%; and
c) Optionally one or more fillers selected from the group consisting of starch, flour, plant-based fiber and microcrystalline cellulose, wherein the filler(s) content is preferably of from 2.5% to 55wt%;
wherein if the functional carbohydrate(s) comprises curdlan gum, then the composition further consists of one or more of the group consisting of cold-water soluble hydrocolloid, cold-water soluble fiber, cold-water soluble polysaccharide or pectin, preferably from 1.5 to 25wt% in total;
wherein if the functional carbohydrate(s) does not comprise curdlan gum, then the composition further consists of konjac gum, preferably from 1.5 to 25wt%.

13. The composition according to claim 12, wherein the one or more functional carbohydrates are selected from the group consisting of carrageenan, agar, gellan gum, and xanthan gum and the one or more plant proteins are selected from low temperature gelling proteins, which gel at a temperature of from 40 to 85°C.

14. The composition according to claim 12, wherein the one or more functional carbohydrates are selected from the group consisting of carrageenan, agar, gellan gum, and xanthan gum and the one or more plant proteins are selected from high temperature gelling proteins, which gel at a temperature above 85°C.

15. The composition according to claim 12 wherein the functional carbohydrate is selected from curdlan gum and the one or more plant proteins are preferably selected from legume protein, cereal protein, pseudocereal protein, potato protein, canola protein, sunflower protein, hemp protein and pumpkin protein.

16. **A matrix composition** essentially consisting of
- the composition according to any one of claims 12 to 15,
- one or more plant protein powder(s), preferably pea protein powder,
- water,
- optionally salt, and
- optionally fat(s) and/or oil(s).

17. **Use of a composition** according to any one of claims 12 to 15 to replace methylcellulose in meat substitute products, preferably selected from the group consisting of vegetarian or vegan burger patties, sausages, cold-cuts, nuggets, crumbles, meat-like toppings, seafood alternatives, poultry alternatives, breakfast meat alternatives and mincemeat alternatives.

18. **Process for preparing a meat substitute product** comprising the following steps:
i) mixing the composition according to any one of claims 12 to 15 with plant protein powder, preferably pea protein powder, and water, optionally salt, fat(s) and/or oil(s), to prepare a matrix composition;
ii) mixing the matrix composition with one or more of the following:
a) Textured plant protein and/or plant protein powdered concentrate, isolate or flour selected from the group consisting of legume protein, (preferably selected from one or more of pea, soy, fava, lupin, chickpea and lentil protein), cereal protein (preferably selected from one or more of corn, wheat, barley and oat protein), pseudocereal protein (preferably buckwheat, amaranth, quinoa protein), canola protein, sunflower protein, potato protein, hemp protein, pumpkin protein, mycoprotein, algae protein, and fungal protein;
b) Fat(s) and/or oil(s);
c) Salt;
d) Water;
e) Flavoring components;
f) Inclusions;
g) Coloring components;
h) Preservatives
to prepare an uncooked meat substitute product; and
iii) optionally cooking the uncooked meat substitute product.

19. The process according to claim 18 wherein the **meat substitute product** is a product according to any one of claims 1 to 11.
